# EUROPÄISCHE PATENTSCHRIFT

(11) **EP 4 537 786 B1**
(45) Veröffentlichungstag und Bekanntmachung des Hinweises auf die Patenterteilung: **19.08.2026**
(21) Anmeldenummer: 23202635.1
(22) Anmeldetag: 10.10.2023
(51) Int. Cl.: A61C 1/00, A61C 1/05

(54) **FLUIDLEITENDES VERBINDUNGSELEMENT EINES FLUIDBETRIEBENEN, MEDIZINISCHEN, INSBESONDERE DENTALEN, HANDSTÜCKS UND EIN DERARTIGES HANDSTÜCK**
FLUID-CONDUCTING CONNECTING ELEMENT OF A FLUID-OPERATED MEDICAL, IN PARTICULAR DENTAL, HANDPIECE AND SUCH A HANDPIECE
ÉLÉMENT DE CONNEXION CONDUISANT UN FLUIDE D'UNE PIÈCE À MAIN MÉDICALE, EN PARTICULIER DENTAIRE, ACTIONNÉE PAR UN FLUIDE ET UNE TELLE PIÈCE À MAIN

(43) Veröffentlichungstag der Anmeldung: 16.04.2025
(73) Patentinhaber: W & H Dentalwerk Bürmoos GmbH, 5111 Bürmoos (AT)
(72) Erfinder: SCHUH, Walter, 5111 Bürmoos (AT); SCHATZ, Norbert, 5111 Bürmoos (AT); GOLLACKNER, Alois, 5303 Thalgau (AT); GEBETSROITHER, Harald, 5020 Salzburg (AT); LANG, Thomas, 5421 Adnet (AT)
(74) Vertreter: Benda, Ralf

(56) Entgegenhaltungen:
- EP-A1- 3 485 839
- US-A1- 2007 087 303

## Beschreibung

Die vorliegende Erfindung betrifft ein fluidleitendes Verbindungselement eines fluidbetriebenen, medizinischen, insbesondere dentalen, Handstücks zur Übertragung von fluiden Medien, insbesondere Luft und Wasser. Die vorliegende Erfindung betrifft auch ein Verfahren zur Herstellung eines derartigen fluidleitenden Verbindungselements und ein medizinisches, insbesondere dentales, Handstück mit einem derartigen fluidleitenden Verbindungselement.

Aus dem Stand der Technik sind fluidbetriebene, medizinische, insbesondere dentale, Handstücke bekannt, die mehrere Rohre aufweisen, durch welche die unterschiedlichen Fluide, insbesondere Luft und Wasser, zwischen einem Kopfabschnitt des Handstücks und einem Kupplungsende zum Anschluss an eine Fluidquelle geleitet werden. Diese Rohre erstrecken sich durch den eine hohle Außenhülse umfassenden Handstückkörper und sind üblicherweise in Bohrungen eines Fortsatzes des Kopfabschnitts, der in die Außenhülse ragt, gefasst. Ein derartiges Handstück ist zum Beispiel aus der Patentanmeldung EP 4 190 274 A1 bekannt.

Das Einführen jedes einzelnen Rohres in den gebogenen Handstückkörper und das Einfügen jedes einzelnen Rohres in die passende Bohrung des Fortsatzes des Kopfabschnitts bedingt einen hohen Montageaufwand.

Der vorliegenden Erfindung liegt daher die Aufgabe zugrunde eine alternative Lösung für die Übertragung der Medien durch ein fluidbetriebenes, medizinisches, insbesondere dentales, Handstück zu schaffen. Insbesondere sollen durch die alternative Lösung der Montageaufwand und vorzugsweise die Herstellungskosten für fluidbetriebene, medizinische, insbesondere dentale, Handstücke verringert werden.

Diese Aufgabe wird gemäß der vorliegenden Erfindung durch ein fluidleitendes Verbindungselement für ein medizinisches, insbesondere dentales, Handstück mit den Merkmalen des Anspruchs 1, durch ein fluidbetriebenes, medizinisches, insbesondere dentales, Handstück gemäß Anspruch 12, durch ein Set von fluidbetriebenen, medizinischen, insbesondere dentalen, Handstücken gemäß Anspruch 13, durch die Verwendung identischer fluidleitender Verbindungselemente gemäß Anspruch 14 und durch ein Verfahren zur Herstellung eines fluidleitenden Verbindungselements gemäß Anspruch 15 gelöst. Besonders vorteilhafte Ausführungsformen sind in den Unteransprüchen angeführt.

Das erfindungsgemäße fluidleitende Verbindungselement ist als Bauteil eines mit Fluid angetriebenen, medizinischen, insbesondere dentalen, Handstücks ausgebildet. Das fluidleitende Verbindungselement umfasst eine erste, einem Kopfabschnitt des Handstücks zugewandte Stirnfläche, eine zweite, einem Kupplungsende des Handstücks zugewandte Stirnfläche, einen sich von der ersten Stirnfläche zur zweiten Stirnfläche erstreckenden Körper, und mehrere sich von der ersten Stirnfläche durch den Körper zur zweiten Stirnfläche erstreckende Fluidleitungen. Das fluidleitende Verbindungselement oder das gesamte fluidleitende Verbindungselement mit der ersten Stirnfläche, der zweiten Stirnfläche, dem Körper und den mehreren Fluidleitungen ist einteilig aus Kunststoff gebildet.

Das fluidleitende Verbindungselement ist somit als eigenständiges, einteiliges und in das Handstück einfügbares Bauteil für ein mit Fluid angetriebenes, medizinisches, insbesondere dentales, Handstück ausgebildet. Das fluidleitende Verbindungselement kann somit in mit wenigen Handgriffen in dem Handstück verbaut werden, wodurch in vorteilhafter Weise die Montage erheblich erleichtert ist. Insbesondere sind durch das Vorsehen des fluidleitenden Verbindungselements alle Fluidleitungen in einem gemeinsamen Montageschritt in dem Handstück verbaubar. Auch wird in vorteilhafter Weise mit dem Einbau des einteiligen, fluidleitenden Verbindungselements in ein Handstück eine Gewichtsreduktion des Handstücks erzielt.

Es sei ausdrücklich darauf verwiesen, dass neben den im Vorstehenden genannten Teilen des fluidleitenden Verbindungselements vorzugsweise ein oder mehrere weitere Elemente, zum Beispiel ein Positionierelement und/ oder ein über die erste oder zweite Stirnfläche ragendes Rohrstück, die im Folgenden noch detaillierter beschrieben sind, einteilig mit dem fluidleitenden Verbindungselement und aus Kunststoff gebildet sein können. Dieses zumindest eine weitere Element ist somit untrennbarer Teil des fluidleitenden Verbindungselements. Daraus resultieren dieselben Vorteile wie im vorstehenden Absatz beschrieben.

Das fluidleitende Verbindungselement ist vorzugsweise zum Einbau oder zur Aufnahme in dem medizinischen, insbesondere dentalen, Handstück ausgebildet. Insbesondere ist das fluidleitende Verbindungselement zur Aufnahme in einer hohlen Außenhülse des Handstücks und/ oder das Handstück zur Aufnahme des fluidleitenden Verbindungselements, insbesondere im Inneren der hohlen Außenhülse, ausgebildet. Das Handstück, insbesondere die hohle Außenhülse, umgibt oder umschließt das fluidleitende Verbindungselement vorzugsweise vollständig, so dass das fluidleitende Verbindungselement, wenn es in dem Handstück aufgenommen ist, keinen unmittelbaren Kontakt zur Umgebung hat.

Das fluidleitende Verbindungselement, insbesondere der Körper, ist vorzugsweise von länglicher Form und/ oder erstreckt sich entlang einer, bevorzugt gebogenen oder gewinkelten, Längsachse. Die Außenform des fluidleitenden Verbindungselements, insbesondere des Körpers, ist vorzugsweise zylindrisch, bevorzugt gebogen oder gewinkelt zylindrisch. Jedoch kann aufgrund einer oder mehrere Einstiche, Vorsprünge, Rücksprünge, Hinterschneidungen, Ausnehmungen oder ähnlicher geometrischer Ausgestaltungen des Körpers bei manchen Ausführungsformen des fluidleitenden Verbindungselements nur ein Abschnitt oder Teil einer Außenfläche als zylindrischer Außenmantel ausgebildet sein. Diese genannten geometrischen Ausgestaltungen dienen zum Beispiel der Durchführung oder Passage eines Mediums, insbesondere eines Druckgases oder Druckluft, besonders bevorzugt der Rückführung von Druckgas, welches das Handstück antreibt, und/ oder einer Medienleitung und/ oder einer elektrischen Versorgungs-, Steuer- und/ oder Signalleitung und/ oder eines Lichtleiters.

Die erste Stirnfläche und/ oder die zweite Stirnfläche ist/ sind vorzugsweise kreisförmig oder oval ausgebildet. Der Außendurchmesser der ersten und/ oder zweiten Stirnfläche kann/ können vorzugsweise größer sein als der Außendurchmesser des Körpers des fluidleitenden Verbindungselements. Die erste und/ oder zweite Stirnfläche kann/ können insbesondere auf einer, vorzugsweisen ringförmigen oder ovalen, Verbreiterung an dem jeweiligen Ende des Körpers oder des fluidleitenden Verbindungselements angeordnet sein. Diese Merkmale erleichtern das Einführen oder Positionieren des fluidleitenden Verbindungselements in das Handstück.

Vorzugsweise ist an der ersten und/ oder zweiten Stirnfläche ein Dichtelement vorgesehen, insbesondere ein flaches und/ oder scheibenförmiges Dichtelement. Vorzugsweise ist das Dichtelement ein separates Bauteil, das auf die erste und/ oder zweite Stirnfläche aufgelegt ist. Das Dichtelement dichtet die Schnittstellen an den Stirnflächen, an denen die fluiden Medien in das fluidleitende Verbindungselement oder aus dem fluidleitenden Verbindungselement übertragen werden, ab. Vorzugsweise ist ein einziges Dichtelement pro Stirnfläche vorgesehen, das alle an einer der ersten oder zweiten Stirnflächen austretenden Fluidleitungen oder Fluidöffnungen abdichtet. Vorzugsweise sind an der ersten und/ oder zweiten Stirnfläche eine Ausnehmung und/ oder eine Vertiefung vorgesehen, in der das Dichtelement einlegbar und/ oder positionierbar ist. Damit kann das Dichtelement auf dem fluidleitenden Verbindungselement korrekt angeordnet werden und insbesondere gemeinsam mit dem fluidleitenden Verbindungselement in das Handstück eingeführt werden, wodurch in vorteilhafter Weise die Montage des Handstücks weiter vereinfacht wird.

Vorzugsweise ist das einteilige, fluidleitende Verbindungselement durch Spritzguss und/ oder aus einem für das Spritzgießen geeigneten Kunststoff hergestellt ist. Insbesondere ist das gesamte einteilige, fluidleitende Verbindungselement mit der ersten Stirnfläche, der zweiten Stirnfläche, dem Körper, den mehreren Fluidleitungen und gegebenenfalls weiteren Elementen des fluidleitenden Verbindungselements, zum Beispiel einem Positionierelement und/ oder einem über die erste oder zweite Stirnfläche ragenden Rohrstück, die im Folgenden noch detaillierter beschrieben sind, durch Spritzguss und/ oder aus einem für das Spritzgießen geeigneten Kunststoff hergestellt. Überraschender Weise ist es möglich, das fluidleitende Verbindungselement mittels Spritzgussverfahren derart herzustellen, dass kaum eine, idealerweise keine Nachbearbeitung notwendig ist. Das spritzgussgefertigte fluidleitende Verbindungselement kann damit im Wesentlichen so, wie es von der Spritzgussmaschine entnommen wird, verbaut werden. Dies führt im Weiteren überraschender Weise dazu, dass die Fertigungs- und Montagekosten für ein durch Spritzguss hergestelltes, fluidleitendes Verbindungselement erheblich kostengünstiger sind als die Kosten für mehrere, separate Rohrleitungen.

Technisch ist es auch möglich, das einteilige, fluidleitende Verbindungselement einschließlich der im vorstehenden Absatz genannten Teile und weiteren Elemente spanabhebend aus Kunststoff zu fertigen. Jedoch sind hierfür viele Bearbeitungs- und Nachbearbeitungsschritte notwendig, so dass eine spanabhebende Herstellung ökonomisch nachteilig ist.

Ein für das Spritzgießen geeigneter Kunststoff zur Herstellung des einteiligen, fluidleitenden Verbindungselements kann einen thermoplastischen, duroplastischen oder elastomeren Kunststoff umfassen. Beispiele für derartige Kunststoffe sind Polystyrol, Polyphenylensulfid (PPS), Polyetheretherketon (PEEK) oder glasfaserverstärkte Kunststoffe, zum Beispiel glasfaserverstärktes Polyamid.

Vorzugsweise ist das einteilige, fluidleitende Verbindungselement entlang seiner Längsausdehnung oder Längsachse gebogen. Vorzugsweise weist das einteilige, fluidleitende Verbindungselement entlang seiner Längsausdehnung einen Biegeradius auf bzw. ist die Längsachse des einteiligen, fluidleitenden Verbindungselements gebogen. Besonders bevorzugt ist bzw. wird das einteilige, fluidleitende Verbindungselement entlang seiner Längsausdehnung gebogen spritzgegossen. Das einteilige, fluidleitende Verbindungselement ist somit besonders bevorzugt bereits bei der Entnahme aus der Spritzgussform entlang seiner Längsausdehnung gebogen. Vorzugsweise ist die Spritzgussform des Verbindungselements entlang ihrer Längsausdehnung gebogen bzw. ist/ wird das einteilige, fluidleitende Verbindungselement in einer entlang ihrer Längsausdehnung gebogenen Spritzgussform spritzgegossen. In entsprechender Weise ist zumindest eine der mehreren Fluidleitungen entlang ihrer Längsausdehnung durch den Körper des fluidleitenden Verbindungselements gebogen ausgebildet und/ oder weist einen entsprechenden Biegeradius auf und/ oder ist bzw. wird gebogen spritzgegossen. Diese Merkmale bewirken, dass das einteilige, fluidleitende Verbindungselement aus einem festen oder nicht biegsamen Kunststoff herstellbar bzw. hergestellt ist, was insbesondere beim Einbau des Verbindungselements in dem Handstück und/ oder bei der Verbindung des Verbindungselements mit dem Kopfteil, zum Beispiel mittels eines Hohlschraube, siehe unten, von Vorteil ist. Vorzugsweise entsprechen die Biegung oder der Biegeradius der Außenhülse des Handstücks und des fluidleitenden Verbindungselements einander, so dass das Verbindungselement passend in den gebogenen Abschnitt der Außenhülse aufnehmbar oder aufgenommen ist. Dies erleichtert den Einbau des Verbindungselements in das Handstück.

Alternativ ist das einteilige, fluidleitende Verbindungselement entlang seiner Längsausdehnung oder Längsachse gewinkelt ausgebildet. Vorzugsweise umfasst das einteilige, fluidleitende Verbindungselement, insbesondere der Körper, einen ersten Abschnitt und einen zweiten Abschnitt, die gewinkelt zueinander angeordnet sind, wobei der Winkel ungleich 0° ist. Vorzugsweise ist der Winkel zwischen dem ersten und dem zweiten Abschnitt kleiner 45°, insbesondere kleiner 30°. Zum Beispiel beträgt der Winkel etwa 10° - 25°. Besonders bevorzugt ist bzw. wird das einteilige, fluidleitende Verbindungselement entlang seiner Längsausdehnung gewinkelt spritzgegossen. Das einteilige, fluidleitende Verbindungselement ist somit besonders bevorzugt bereits bei der Entnahme aus der Spritzgussform entlang seiner Längsausdehnung gewinkelt und/ oder weist den ersten Abschnitt und den gewinkelt dazu ausgebildeten zweiten Abschnitt auf. Vorzugsweise ist die Spritzgussform des Verbindungselements entlang ihrer Längsausdehnung gewinkelt bzw. ist/ wird das einteilige, fluidleitende Verbindungselement in einer entlang ihrer Längsausdehnung gewinkelten Spritzgussform spritzgegossen. In entsprechender Weise ist zumindest eine der mehreren Fluidleitungen entlang ihrer Längsausdehnung durch den Körper des fluidleitenden Verbindungselements gewinkelt ausgebildet und/ oder weist einen entsprechenden Winkel auf und/ oder ist bzw. wird gewinkelt spritzgegossen. Diese Merkmale bewirken, dass das einteilige, fluidleitende Verbindungselement aus einem festen oder nicht biegsamen Kunststoff herstellbar bzw. hergestellt ist, was insbesondere beim Einbau des Verbindungselements in dem Handstück und/ oder bei der Verbindung des Verbindungselements mit dem Kopfteil, zum Beispiel mittels eines Hohlschraube, siehe unten, von Vorteil ist.

Alternativ ist es auch denkbar, dass das einteilige, fluidleitende Verbindungselement derart elastisch verformbar ist, dass es in einem entlang seiner Längsausdehnung gebogenen Hülsenabschnitt des medizinischen, insbesondere dentalen, Handstücks aufnehmbar ist. Vorzugsweise wird das Verbindungselement dem gemäß während des Einbaus und/ oder ist nach dem Einbau in eine entlang seiner Längsausdehnung gebogene Form verformt, insbesondere entlang seiner Längsausdehnung gebogen. Vorzugsweise passt sich das Verbindungselement der Biegung des gebogenen Hülsenabschnitts an. Vorzugsweise ist/ wird das einteilige, fluidleitende Verbindungselement als sich entlang seiner Längsausdehnung oder Längsachse gerade erstreckendes Element hergestellt, insbesondere spritzgegossen. Vorzugsweise ist somit die Spritzgussform des Verbindungselements entlang ihrer Längsausdehnung gerade bzw. ist/ wird das einteilige, fluidleitende Verbindungselement in einer entlang ihrer Längsausdehnung geraden Spritzgussform spritzgegossen. Diese Merkmale bewirken in vorteilhafter Weise aufgrund der Elastizität des einteiligen, fluidleitenden Verbindungselements eine hohe Dichtwirkung an den Schnittstellen zu anderen Komponenten des Handstücks, insbesondere an den Stirnflächen, an denen die fluiden Medien in das Verbindungselement oder aus dem Verbindungselement übertragen werden, so dass gegebenenfalls keine zusätzlichen Dichtelemente notwendig sind.

Gemäß einem Ausführungsbeispiel enden die Fluidleitungen in Öffnungen. Vorzugsweise ist zumindest eine dieser Öffnungen durch ein oder an einem Rohrstück gebildet, das über die erste oder zweite Stirnfläche ragt und das aus Kunststoff und einteilig mit dem fluidleitenden Verbindungselement ausgebildet ist. Vorzugsweise ist das Rohrstück einteilig mit dem fluidleitenden Verbindungselement durch Spritzguss und/ oder aus einem für das Spritzgießen geeigneter Kunststoff hergestellt. Vorzugsweise bildet ein derartiges Rohrstück eine, insbesondere über die erste und/ oder zweite Stirnfläche ragende, Verlängerung einer einteilig mit dem Verbindungselement ausgebildeten und dieses durchsetzenden Fluidleitung. Vorzugsweise ist das Rohrstück im Querschnitt gerundet, zum Beispiel kreisrund, oval oder nierenförmig, geformt. Die einteilige Herstellung des Rohrstücks als Teil des Verbindungselements verringert in vorteilhafter Weise sowohl den Herstellungsals auch den Montageaufwand des Handstücks, da kein zusätzliches, separates Rohrstück zur Verbindung des Verbindungselements mit anschließenden Komponenten des Handstücks nötig ist.

Vorzugsweise ist eine der Fluidleitungen des Verbindungselements zum Leiten von unter Druck stehendendem Gas, insbesondere von Druckluft, vorgesehen. Insbesondere weist eine derartige Druckgasleitung ein über eine Stirnfläche ragendes, aus Kunststoff und einteilig mit dem fluidleitenden Verbindungselement ausgebildetes Rohrstück mit einer Öffnung auf. Besonders bevorzugt umfasst die Druckgasleitung eine derartige Rohrleitung an der zweiten, dem Kupplungsende des Handstücks zugewandten Stirnfläche. Besonders bevorzugt ist diese an der zweiten Stirnfläche vorgesehene Rohrleitung im Querschnitt gerundet, zum Beispiel kreisrund, oval oder nierenförmig, geformt und zur Übertragung von Druckgas zum Antrieb des Handstücks, insbesondere eines Laufrads des Handstücks, vorgesehen. Alternativ oder zusätzlich umfasst die Druckgasleitung eine weitere Rohrleitung, die an der ersten, dem Kopfabschnitt des Handstücks zugewandten Stirnfläche angeordnet ist, von der ersten Stirnfläche absteht, und aus Kunststoff und einteilig mit dem fluidleitenden Verbindungselement ausgebildet ist. Vorzugsweise ist diese weitere Rohrleitung im Querschnitt gerundet, zum Beispiel kreisrund, oval oder nierenförmig, geformt. Die Rohrleitungen sind vorzugsweise einteilig mit dem Verbindungselement durch Spritzguss hergestellt. Diese Merkmale erleichtern in vorteilhafter Weise die Übertragung von Druckgas zwischen dem Verbindungselement und einer daran angrenzenden Komponente des Handstücks, da aufgrund der einteiligen Ausführung des Rohrstücks mit dem Verbindungselement nur eine abzudichtende Schnittstelle an dem freien Ende der Rohrleitung vorhanden ist (wohingegen bei der Verbindung mit einem separaten Rohrstück zwei Schnittstellen an den beiden freien Enden des Rohrstücks abzudichten sind).

Alternativ oder zusätzlich weist das fluidleitende Verbindungselement eine weitere, zweite Fluidleitung zum Leiten von unter Druck stehendendem Gas, insbesondere von Druckluft, auf. Besonders bevorzugt ist diese weitere Fluidleitung zur Übertragung von Kühlgas oder Kühlluft zur Kühlung einer Behandlungsstelle vorgesehen. Bevorzugt ist zumindest eine Öffnung dieser weiteren Druckgasleitung durch ein über eine Stirnfläche ragendes, aus Kunststoff gefertigtes und einteilig mit dem fluidleitenden Verbindungselement ausgebildetes Rohrstück gebildet. Besonders bevorzugt umfasst die Kühlgasleitung eine derartige Rohrleitung an der der ersten, dem Kopfabschnitt des Handstücks zugewandten Stirnfläche. Besonders bevorzugt ist diese an der ersten Stirnfläche vorgesehene Rohrleitung im Querschnitt gerundet, zum Beispiel kreisrund, oval oder nierenförmig. Alternativ oder zusätzlich umfasst die Kühlgasleitung eine weitere Rohrleitung, die an der zweiten, dem Kupplungsende des Handstücks zugewandten Stirnfläche angeordnet ist, von der zweiten Stirnfläche absteht, und aus Kunststoff und einteilig mit dem fluidleitenden Verbindungselement ausgebildet ist. Vorzugsweise ist diese weitere Rohrleitung im Querschnitt gerundet, zum Beispiel kreisrund, oval oder nierenförmig, geformt. Die Rohrleitungen sind vorzugsweise einteilig mit dem Verbindungselement durch Spritzguss hergestellt. Diese Merkmale erleichtern in vorteilhafter Weise die Übertragung von Druckgas zwischen dem Verbindungselement und einer daran angrenzenden Komponente des Handstücks, da aufgrund der einteiligen Ausführung des Rohrstücks mit dem Verbindungselement nur eine abzudichtende Schnittstelle an dem freien Ende der Rohrleitung vorhanden ist (wohingegen bei der Verbindung mit einem separaten Rohrstück zwei Schnittstellen an den beiden freien Enden des Rohrstücks abzudichten sind).

Alternativ oder zusätzlich weist das fluidleitende Verbindungselement eine Fluidleitung zum Leiten einer Flüssigkeit, insbesondere von Wasser, auf. Besonders bevorzugt ist diese Fluidleitung zur Übertragung von Flüssigkeit zur Kühlung einer Behandlungsstelle vorgesehen. Bevorzugt ist zumindest eine Öffnung dieser Flüssigkeitsleitung durch ein über eine Stirnfläche ragendes, aus Kunststoff gefertigtes und einteilig mit dem fluidleitenden Verbindungselement ausgebildetes Rohrstück gebildet. Besonders bevorzugt umfasst die Flüssigkeitsleitung eine derartige Rohrleitung an der ersten, dem Kopfabschnitt des Handstücks zugewandten Stirnfläche. Besonders bevorzugt ist diese an der ersten Stirnfläche vorgesehene Rohrleitung im Querschnitt gerundet, zum Beispiel kreisrund, oval oder nierenförmig. Alternativ oder zusätzlich umfasst die Flüssigkeitsleitung eine weitere Rohrleitung, die an der zweiten, dem Kupplungsende des Handstücks zugewandten Stirnfläche angeordnet ist, von der zweiten Stirnfläche absteht, und aus Kunststoff und einteilig mit dem fluidleitenden Verbindungselement ausgebildet ist. Vorzugsweise ist diese weitere Rohrleitung im Querschnitt gerundet, zum Beispiel kreisrund, oval oder nierenförmig, geformt. Die Rohrleitungen sind vorzugsweise einteilig mit dem Verbindungselement durch Spritzguss hergestellt. Diese Merkmale erleichtern in vorteilhafter Weise die Übertragung von Flüssigkeit zwischen dem Verbindungselement und einer daran angrenzenden Komponente des Handstücks, da aufgrund der einteiligen Ausführung des Rohrstücks mit dem Verbindungselement nur eine abzudichtende Schnittstelle an dem freien Ende der Rohrleitung vorhanden ist (wohingegen bei der Verbindung mit einem separaten Rohrstück zwei Schnittstellen an den beiden freien Enden des Rohrstücks abzudichten sind).

Alternativ oder zusätzlich ist vorgesehen, dass in zumindest einer Öffnung einer Fluidleitung des Verbindungselements zumindest ein separates, nicht mit dem Verbindungsstück einteilig ausgebildetes Rohrstück zur Fluidleitung eingesteckt ist. Vorzugsweise ist die Öffnung in oder plan mit der ersten oder zweiten Stirnfläche ausgebildet. Vorzugsweise ist das separate Rohrstück aus Metall oder Kunststoff gefertigt. Die Verwendung von separaten Rohrstücken erlaubt bei der Herstellung des fluidleitenden Verbindungselements in vorteilhafter Weise größere Fertigungstoleranzen, da das separate Rohrstück Abstände zwischen dem fluidleitenden Verbindungselement und einer daran anschließenden Komponente überbrücken kann.

Vorzugweise ist die Fluidleitung, in deren Öffnung ein separates Rohrstück aufgenommen ist, zum Leiten von unter Druck stehendendem Gas, insbesondere von Druckluft, vorgesehen, insbesondere zur Übertragung von Druckgas zum Antrieb des Handstücks, insbesondere eines Laufrads des Handstücks. Wahlweise ist in beiden Öffnungen an der ersten und zweiten Stirnfläche der Druckgasleitung ein separates Rohrstück eingesteckt oder in einer der beiden Öffnungen an der ersten oder zweiten Stirnfläche ist ein separates Rohrstück aufgenommen, während die andere Öffnung an der ersten oder zweiten Stirnfläche ein Rohrstück umfasst, das, wie im Vorstehenden beschrieben, von der Stirnfläche absteht und aus Kunststoff und einteilig mit dem fluidleitenden Verbindungselement ausgebildet ist. Das Vorsehen je einer separaten und einer einteilig mit dem fluidleitenden Verbindungselement ausgebildeten Rohrleitung ist besonders vorteilhaft, da es die jeweiligen Vorteile vereint, i.e. nur eine abzudichtende Schnittstelle an dem einteilig mit dem Verbindungselement ausgebildeten Rohrstück und geringere Fertigungstoleranzen aufgrund des separaten Rohrstücks.

Alternativ oder zusätzlich weist das fluidleitende Verbindungselement eine weitere, zweite Fluidleitung zum Leiten von unter Druck stehendendem Gas, insbesondere von Druckluft, auf. Besonders bevorzugt ist diese weitere Fluidleitung zur Übertragung von Kühlgas oder Kühlluft zur Kühlung einer Behandlungsstelle vorgesehen. Wahlweise ist in beiden Öffnungen an der ersten und zweiten Stirnfläche der weiteren Druckgasleitung ein separates Rohrstück eingesteckt oder in einer der beiden Öffnungen an der ersten oder zweiten Stirnfläche ist ein separates Rohrstück aufgenommen, während die andere Öffnung an der ersten oder zweiten Stirnfläche ein Rohrstück umfasst, das, wie im Vorstehenden beschrieben, von der Stirnfläche absteht und aus Kunststoff und einteilig mit dem fluidleitenden Verbindungselement ausgebildet ist. Das Vorsehen je einer separaten und einer einteilig mit dem fluidleitenden Verbindungselement ausgebildeten Rohrleitung ist besonders vorteilhaft, da es die jeweiligen Vorteile vereint, i.e. nur eine abzudichtende Schnittstelle an dem einteilig mit dem Verbindungselement ausgebildeten Rohrstück und geringere Fertigungstoleranzen aufgrund des separaten Rohrstücks.

Alternativ oder zusätzlich weist das fluidleitende Verbindungselement eine Fluidleitung zum Leiten einer Flüssigkeit, insbesondere von Wasser, auf. Besonders bevorzugt ist diese Fluidleitung zur Übertragung von Flüssigkeit zur Kühlung einer Behandlungsstelle vorgesehen. Wahlweise ist in beiden Öffnungen an der ersten und zweiten Stirnfläche der Flüssigkeitsleitung ein separates Rohrstück eingesteckt oder in einer der beiden Öffnungen an der ersten oder zweiten Stirnfläche ist ein separates Rohrstück aufgenommen, während die andere Öffnung an der ersten oder zweiten Stirnfläche ein Rohrstück umfasst, das, wie im Vorstehenden beschrieben, von der Stimfläche absteht und aus Kunststoff und einteilig mit dem fluidleitenden Verbindungselement ausgebildet ist. Das Vorsehen je einer separaten und einer einteilig mit dem fluidleitenden Verbindungselement ausgebildeten Rohrleitung ist besonders vorteilhaft, da es die jeweiligen Vorteile vereint, i.e. nur eine abzudichtende Schnittstelle an dem einteilig mit dem Verbindungselement ausgebildeten Rohrstück und geringere Fertigungstoleranzen aufgrund des separaten Rohrstücks.

Vorzugsweise ist das zumindest eine einteilig mit dem fluidleitenden Verbindungselement ausgebildete Rohrstück und/ oder das separate, in die Öffnung des Verbindungselements eingesteckte Rohrstück ausgebildet oder dafür vorgesehen, dass es in eine Öffnung einer an das einteilige, fluidleitende Verbindungselement anschließenden Komponenten des Handstücks einführbar bzw. eingeführt ist. Diese Komponente umfasst zum Beispiel den Fortsatz des Kopfabschnitts oder Rohrleitungen oder einen Kupplungszylinder, der zwischen dem Kupplungsende des Handstücks und dem Verbindungselement angeordnet ist. Die Öffnung der Komponente ist insbesondere dafür vorgesehen, ein in dem einteiligen und/ oder separaten Rohrstück geleitetes Fluid zu übernehmen und weiterzuleiten oder ein Fluid zur Weiterleitung an das einteilige und/ oder separate Rohrstück und die zugehörige Fluidleitung zu übergeben. Das zumindest eine einteilige und/ oder separate Rohrstück ist damit auch Teil einer, insbesondere fluidübertragenden, Schnittstelle. Selbstverständlich ist es umgekehrt auch möglich, dass ein Rohrstück an einer Komponente des Handstücks, zum Beispiel an dem Fortsatz des Kopfabschnitts oder am Kupplungszylinder, vorgesehen ist, und dass dieses Rohrstück in eine Öffnung an der ersten oder zweiten Stirnfläche des Verbindungselements eingesteckt ist. Diese Merkmale ermöglichen in vorteilhafter Weise eine zuverlässige Übertragung von Fluid auf das bzw. von dem Verbindungselement.

Vorzugsweise weist das fluidleitende Verbindungselement ein Positionierelement zum Positionieren des fluidleitenden Verbindungselements in dem medizinischen, insbesondere dentalen, Handstück, insbesondere an der Innenseite der Außenhülse, auf. Das Positionierelement erleichtert in vorteilhafter Weise das Einführen und/ oder das Positionieren des fluidleitenden Verbindungselements in dem Handstück und/ oder das Verbinden des fluidleitenden Verbindungselements, insbesondere der einteilig oder separat mit dem Verbindungselement ausgebildeten Rohrstücke, mit anderen Bauteilen des Handstücks. Das Positionierelement ist zum Beispiel an der Außenfläche des Körpers und/ oder der Verbreiterung an einem Ende des Körpers des fluidleitenden Verbindungselements und/ oder an der ersten oder zweiten Stirnfläche angeordnet. Das Positionierelement ist zum Beispiel angrenzend an eine Öffnung einer Fluidleitung des Verbindungselements angeordnet. Das Positionierelement ist zum Beispiel anschließend an ein Rohrstück einer Fluidleitung des Verbindungselements angeordnet, um damit die Verbindung der Öffnung oder des Rohrstücks mit einem Bauteil des Handstücks zu erleichtern. Das Positionierelement ist zum Beispiel als Fortsatz oder Vorsprung, der vom Körper absteht, ausgebildet. Das Positionierelement ist insbesondere dazu vorgesehen, dass es die Innenseite der Außenhülse des Handstücks kontaktiert. Vorzugsweise ist das Positionierelement komplementär zu einer Ausformung der Innenseite der Außenhülse ausgebildet und/ oder die Innenseite der Außenhülse weist eine Ausformung zur Aufnahme des Positionierelements auf, insbesondere eine zum Positionierelement komplementäre Ausformung. Damit wird in vorteilhafter Weise das Einführen und Positionieren des fluidleitenden Verbindungselements während der Montage weiter vereinfacht.

Wie im Vorstehenden beschrieben, ist das Positionierelement vorzugsweise einteilig mit dem fluidleitenden Verbindungselement ausgebildet, insbesondere einteilig mit dem fluidleitenden Verbindungselement durch Spritzguss und/ oder aus einem für das Spritzgießen geeigneten Kunststoff hergestellt. Durch diese Merkmale entfällt in vorteilhafter Weise ein weiterer, separater Herstellungs- bzw. Montageschritt für das Positionierelement.

Vorzugsweise weist zumindest eine der mehreren Fluidleitungen des einteiligen, fluidleitenden Verbindungselements einen sich innerhalb Körper des fluidleitenden Verbindungselements verändernden Innendurchmesser auf. Vorzugsweise ist der sich verändernde Durchmesser während oder durch das Spritzgießen hergestellt. Vorzugsweise verringert sich der Innendurchmesser von der zweiten, dem Kupplungsende zugewandten Stirnfläche in Richtung der ersten, dem Kopfabschnitt zugewandten Stirnfläche. Vorzugsweise verändert sich der Innendurchmesser zumindest innerhalb eines Abschnitts einer der Fluidleitungen kontinuierlich. Alternativ verändert sich der Innendurchmesser zumindest innerhalb eines Abschnitts einer der Fluidleitungen unstetig, zum Beispiel durch eine Stufe oder Schulter an der Wand der Fluidleitung. Diese Merkmale bewirken in vorteilhafter Weise eine Beeinflussung des Strömungsverhaltens eines in einer Fluidleitung fließenden Fluids, zum Beispiel eine Beschleunigung der Fließgeschwindigkeit, eine Düsenwirkung und/ oder einen kompakteren Strahl des von der Fluidleitung abgegebenen Fluids.

Vorzugsweise umfasst das einteilige, aus Kunststoff hergestellte, fluidleitende Verbindungselement an seiner Außenfläche eine Ausnehmung zur Aufnahme einer Medienleitung und/ oder eines Mediums und/ oder eines Sensors. Diese im Vorstehenden auch als geometrische Ausgestaltung bezeichnete Ausnehmung nimmt zum Beispiel eine Medienleitung für ein Fluid und/ oder eine elektrische Leitung, insbesondere eine Versorgungs-, Steuer- und/ oder Signalleitung, und/ oder einen optischen Lichtleiter auf. Alternativ oder zusätzlich nimmt die Ausnehmung ein Medium, zum Beispiel ein Fluid auf und leitet dieses weiter und ist somit vorzugsweise auch als Fluidleitung ausgebildet. Die Ausnehmung umfasst zum Beispiel eine Kerbe, einen Kanal, einen Einstich, Vorsprung, Rücksprung, eine Hinterschneidung oder ähnliche geometrische Ausgestaltungen. Vorzugsweise ist die Ausnehmung einteilig mit dem Verbindungselement hergestellt, insbesondere durch Spritzguss. Bevorzugt ist die Ausnehmung zur Umgebung, insbesondere zur Innenwand der Außenhülse, offen. Die Ausnehmung erstreckt sich vorzugsweise zwischen der ersten und der zweiten Stirnfläche. Die Ausnehmung erstreckt sich entweder entlang der gesamten Längsausdehnung von der ersten bis zur zweiten Stirnfläche des Verbindungselements oder ist nur in einem Abschnitt des Verbindungselements vorgesehen. Die Ausnehmung zur Aufnahme einer Medienleitung oder eines Mediums dient damit in vorteilhafter Weise zusätzlich zur Leitung der Fluide in den Fluidleitungen des Verbindungselements auch zur Leitung eines weiteren Mediums und/ oder zur Führung und/ oder Lagerung von Medienleitungen.

Das Vorsehen einer derartigen Ausnehmung, die so geformt und bemessen ist, dass sie - je nach den Erfordernissen eines Handstücks - unterschiedliche Medienleitungen und/ oder Medien und/ oder Sensoren aufnehmen kann, ist insbesondere auch für die Schaffung eines Sets von unterschiedlichen, medizinischen, insbesondere dentalen, mit Fluid betriebenen Handstücken, die identische einteilige, fluidleitende Verbindungselemente aufweisen, von hoher Relevanz. Ein Ausführungsbeispiel eines solchen Sets ist im Folgenden noch detaillierter beschrieben. Erst eine derartige Ausnehmung ermöglicht die notwendige Flexibilität, um unterschiedliche Handstück mit identischen fluidleitenden Verbindungselementen herzustellen.

Vorzugsweise ist die Ausnehmung entlang ihrer Längsausdehnung oder Längsachse gebogen. Vorzugsweise weist die Ausnehmung entlang ihrer Längsausdehnung einen Biegeradius auf. Vorzugsweise ist die Ausnehmung entsprechend oder gleich dem einteiligen, fluidleitenden Verbindungselement gebogen, insbesondere weisen die Ausnehmung und der Körper oder die Längsachse des Verbindungselements einen ähnlichen oder denselben Biegeradius auf. Vorzugsweise ist die Ausnehmung gebogen hergestellt, insbesondere spritzgegossen. Durch diese Merkmale folgt die Ausnehmung der gebogenen Form des Handstücks, insbesondere der Außenhülse, und bildet somit in vorteilhafter Weise mit der Außenhülse einen Leitungskanal für Medienleitungen und/ oder Medien.

Gemäß einer besonders bevorzugten Ausführungsbeispiel ist die Ausnehmung zur Leitung von Druckluft, insbesondere sogenannter Rückluft, die nach dem Antrieb eines Laufrads aus dem Kopfabschnitt in Richtung des Kupplungsendes des Handstücks fließt, vorgesehen. Bevorzugt ist diese Ausnehmung zur Umgebung, insbesondere zur Innenwand der Außenhülse, offen und bildet insbesondere gemeinsam mit einem Abschnitt der Innenwand der Außenhülse eine Leitung oder einen Leitungskanal für die in Richtung des Kupplungsendes fließende Druckluft. Das einteilige, fluidleitende Verbindungselement ist somit in vorteilhafter Weise für die Leitung von Medien in unterschiedliche Richtungen ausgebildet. Besonders bevorzugt ist in dieser Ausnehmung zur Leitung von Druckluft auch eine der im vorstehenden Absatz genannten Medienleitungen aufgenommen, so dass dafür in vorteilhafter Weise keine zusätzliche Ausnehmung notwendig ist.

Die in den vorstehenden Absätzen beschriebene Ausnehmung für eine Medienleitung, einen Sensor, ein Medium und/ oder Druckluft ist in zumindest einem der folgenden Abschnitte des einteiligen, fluidleitenden Verbindungselements vorgesehen: in dem Körper; in der ersten und/ oder zweiten Stirnfläche; in zumindest einer der Verbreiterungen an dem jeweiligen Ende des Körpers. Die Ausnehmung, insbesondere die Abschnitte, welche die Ausnehmung formen, ist/ sind vorzugsweise einteilig mit dem Verbindungselement und insbesondere durch Spritzgießen oder während des Spritzgießens des Verbindungselements und/ oder aus einem für das Spritzgießen geeigneten Kunststoff hergestellt. Damit ist in vorteilhafter Weise auch für die Herstellung der Ausnehmung kein zusätzlicher Herstellungsschritt notwendig.

Vorzugsweise umfasst das fluidleitende Verbindungselement zumindest eine Öffnung oder Durchführung für einen optischen Lichtleiter. Diese Durchführung ist vorzugsweise getrennt von der im Vorstehenden beschriebenen Ausnehmung für eine Medienleitung, ein Medium und/ oder Druckluft ausgebildet. Diese Durchführung ist in zumindest einem der folgenden Abschnitte des einteiligen, fluidleitenden Verbindungselements vorgesehen: in dem Körper; in der ersten und/ oder zweiten Stirnfläche; in zumindest einer der Verbreiterung an dem jeweiligen Ende des Körpers. Die Durchführung ist insbesondere in sich geschlossen, zum Beispiel rund oder oval, so dass vorzugsweise die Durchführung den Lichtleiter voll umfänglich umgibt. Das fluidleitende Verbindungselement dient damit in vorteilhafter Weise zusätzlich auch der Lagerung eines optischen Lichtleiters in dem Handstück, insbesondere der zuverlässigen Lagerung eines oftmals leicht zerbrechlichen optischen Lichtleiters. Die Durchführung ist vorzugsweise einteilig mit dem Verbindungselement und insbesondere durch Spritzgießens oder während des Spritzgießens des Verbindungselements und/ oder aus einem für das Spritzgießen geeigneten Kunststoff hergestellt. Für die Herstellung der Öffnung oder Durchführung ist somit in vorteilhafter Weise wiederum kein zusätzlicher Herstellungsschritt notwendig.

Gemäß einem Ausführungsbeispiel ist das einteilige, fluidleitende Verbindungselement über eine Schraubverbindung mit dem Kopfabschnitt des medizinischen, insbesondere dentalen, Handstücks verbunden. Damit wird in vorteilhafter Weise eine zuverlässige Verbindung zur Übertragung der Fluide zwischen den Fluidleitungen des Verbindungselements und dem Kopfabschnitt geschaffen.

Vorzugsweise weist der Kopfabschnitt, insbesondere ein Fortsatz des Kopfabschnitts, der in die Außenhülse aufnehmbar oder aufgenommen ist, ein Gewinde auf. Vorzugsweise ist das Gewinde des Kopfabschnitts als Innengewinde einer Bohrung des Kopfabschnitts oder des Fortsatzes ausgebildet. Vorzugsweise ist eine Gewindeschraube vorgesehen, die in dem fluidleitenden Verbindungselement und in der Bohrung des Kopfabschnitts aufnehmbar ist und die mit dem Gewinde des Kopfabschnitts verschraubbar ist, um den Kopfabschnitt mit dem fluidleitenden Verbindungselement zu verbinden. Vorzugsweise ist die Gewindeschraube in einer Bohrung oder Öffnung des Verbindungselements aufgenommen. Diese Merkmale erleichtern die Verbindung des Kopfabschnitts mit dem Verbindungselement während der Montage des Handstücks in vorteilhafter Weise.

Besonders bevorzugt ist die Gewindeschraube als Hohlschraube ausgebildet, an deren Außenseite eine Außengewinde vorgesehen ist. Besonders bevorzugt ist die Gewindeschraube oder die Hohlschraube in der im Vorstehenden beschriebenen Ausnehmung des fluidleitenden Verbindungselements, insbesondere in der Ausnehmung zur Leitung von Rückluft, aufnehmbar oder aufgenommen. Besonders bevorzugt ist die Bohrung mit dem Innengewinde des Kopfabschnitts oder Fortsatzes als Leitungskanal für die Rückluft ausgebildet. Besonders bevorzugt sind die Bohrung und die mit der Bohrung verschraubte und in der Ausnehmung angeordnete Hohlschraube zur Ableitung der Rückluft aus Kopfabschnitt in Richtung des Kupplungsendes des Handstücks ausgebildet. Die Ausbildung der Schraubverbindung zur Verbindung des Verbindungselements mit dem Kopfabschnitt als Leitung für die Rückluft ist eine äußerst vorteilhafte und platzsparende Maßnahme.

Vorzugsweise ist an der Außenseite der Hohlschraube zumindest ein erster Anschlag vorgesehen. Vorzugsweise ist an der Außenfläche oder dem Außenmantel des fluidleitenden Verbindungselements und/ oder an der Innenseite der Außenhülse des Handstücks ein erster Gegenanschlag vorgesehen. Vorzugsweise kontaktieren der erste Anschlag und der erste Gegenanschlag einander, wenn die Hohlschraube, das Verbindungselement und der Kopfabschnitt in der Außenhülse aufgenommen sind und das Verbindungselement und der Kopfabschnitt über die Hohlschraube verbunden sind. Vorzugsweise ist an der Außenfläche oder dem Außenmantel des fluidleitenden Verbindungselements ein zweiter Anschlag und an der Innenseite der Außenhülse des Handstücks ein zweiter Gegenanschlag vorgesehen. Vorzugsweise kontaktieren der zweite Anschlag und der zweite Gegenanschlag einander, wenn die Hohlschraube, das Verbindungselement und der Kopfabschnitt in der Außenhülse aufgenommen sind und das Verbindungselement und der Kopfabschnitt über die Hohlschraube verbunden sind. Die im Vorstehenden beschriebenen ersten und zweiten Anschläge und Gegenanschläge umfassen zum Beispiel einen Fortsatz, eine Schulter, eine Ringschulter, eine Stufe oder ähnliche geometrische Formen. Das Vorsehen der Anschläge und Gegenanschläge stabilisiert in vorteilhafter Weise die Verbindung des Kopfabschnitts, des fluidleitenden Verbindungselements und der Außenhülse des Handstücks und positioniert diese Elemente zuverlässig im Handstück.

Gemäß einem Ausführungsbeispiel ist ein medizinisches, insbesondere dentales, mit Fluid betriebenes Handstück, vorgesehen, das ein im Vorstehenden beschriebenes, fluidleitendes Verbindungselement aufweist. Das Handstück umfasst vorzugsweise einen Kopfabschnitt, in dem ein durch Druckgas antreibbares Laufrad drehbar gelagert ist. Mit dem Laufrad ist eine Werkzeughalterung drehfest verbunden, in die ein Behandlungswerkzeug aufnehmbar ist, wodurch das Behandlungswerkzeug in Rotation versetzbar ist. Wie im Vorstehenden beschrieben, ist das einteilige, fluidleitende Verbindungselement unter anderem dafür vorgesehen, Druckluft für den Antrieb des Laufrads an das Laufrad bzw. an den Kopfabschnitt zu übertragen. Das fluidleitende Verbindungselement ist auch dafür vorgesehen Kühlluft und Kühlwasser an den Kopfabschnitt und/ oder an das Behandlungswerkzeug und/ oder die Behandlungsstelle zu übertragen.

Das Handstück umfasst des Weiteren eine Außenhülse, von der zumindest ein Teil als Griffhülse zum Halten des Handstücks mit einer Hand ausgebildet ist. Die Außenhülse ist mit dem Kopfabschnitt über den Fortsatz des Kopfabschnitts, der in die Außenhülse aufnehmbar oder aufgenommen ist, verbunden. Das im Vorstehenden beschriebene, einteilige, fluidleitende Verbindungselement ist in der Außenhülse aufgenommen, insbesondere in einem an den Kopfabschnitt anschließenden Bereich der Außenhülse, der entlang seiner Längsachse oder Längsausdehnung gebogen ist. Vorzugsweise entsprechen die Biegung oder der Biegeradius der Außenhülse und des fluidleitenden Verbindungselements einander, so dass das Verbindungselement passend in den gebogenen Abschnitt der Außenhülse aufnehmbar oder aufgenommen ist.

Das Ende des Handstücks, das dem Kopfabschnitt gegenüber liegt, ist als Kupplungsende ausgebildet. An dem Kupplungsende sind fluidleitende Anschlüsse an Fluidquellen, die insbesondere Druckgas und/ oder eine Flüssigkeit zur Verfügung stellen, vorgesehen. Die Anschlüsse können zusätzlich auch einen elektrischen Leiter zur Übertragung von elektrischer Energie, Steuer- oder Regelsignalen oder Messwerten und/ oder optische Leiter umfassen. Die Anschlüsse sind über einen Versorgungsschlauch, der entsprechende Medienleitung und elektrische Leitungen aufweist, mit den Fluidquellen bzw. einer Steuer- oder Regelvorrichtung, insbesondere mit einem Mikrocontroller, verbindbar. Das einteilige, fluidleitende Verbindungselement ist mit den Anschlüssen, insbesondere den fluidleitenden Anschlüssen, verbunden, um die über die Anschlüsse zur Verfügung gestellten Medien und/ oder Fluide zu empfangen und weiterzuleiten, so wie dies im Vorstehenden beschrieben ist. Zur fluid-übertragenden Verbindung zwischen den Anschlüssen und dem fluidleitenden Verbindungselement sind vorzugsweise ein oder mehrere weitere fluidleitende Komponenten im Handstück vorgesehen, zum Beispiel eine Rohrleitung oder ein Kupplungszylinder mit Bohrungen für die Leitung von Fluiden.

Gemäß einem Ausführungsbeispiel ist ein Set von unterschiedlichen, medizinischen, insbesondere dentalen, mit Fluid betriebenen Handstücken vorgesehen, wobei die unterschiedlichen Handstücke identische einteilige, fluidleitende Verbindungselemente wie sie im Vorstehenden beschrieben sind, aufweisen. Gemäß einem Ausführungsbeispiel ist die Verwendung identischer, einteiliger, fluidleitender Verbindungselemente, wie sie im Vorstehenden beschrieben sind, zur Herstellung unterschiedlicher, medizinischer, insbesondere dentaler, mit Fluid betriebener Handstücke vorgesehen.

Vorzugsweise umfassen die unterschiedlichen Handstücke auch die identische, im Vorstehenden beschriebene Schraubverbindung mit dem Kopfabschnitt, insbesondere mit der identischen Hohlschraube. Vorzugsweise ist auch die Schnittstelle zwischen den identischen Verbindungselementen und den Fortsätzen der Kopfabschnitte der unterschiedlichen Handstücke identisch, insbesondere sind Bohrungen oder Öffnungen an den Fortsätzen der Kopfabschnitte der unterschiedlichen Handstücke zur Verbindung mit den Fluidleitungen der Verbindungselemente, insbesondere zur Aufnahme eines Rohrstücks, identisch ausgebildet und positioniert. Entsprechendes trifft auch auf die Schnittstelle am anderen, dem Kupplungsende des Handstücks zugewandten Ende der Verbindungselemente zu: vorzugsweise ist die Schnittstelle zwischen den identischen Verbindungselementen und Kupplungszylindern der unterschiedlichen Handstücke, welche das Kupplungsende der Handstücke mit den Verbindungselementen verbindet, identisch, insbesondere sind Bohrungen oder Öffnungen an den Kupplungszylindern der unterschiedlichen Handstücke zur Verbindung mit den Fluidleitungen der Verbindungselemente, insbesondere zur Aufnahme eines Rohrstücks, identisch ausgebildet und positioniert. Vorzugsweise umfasst die Verwendung auch das Verbinden und Positionieren der identischen Verbindungselemente in unterschiedlichen Handstücken mit der Schraubverbindung, insbesondere der Hohlschraube, wie dies im Vorstehenden ebenfalls beschrieben ist.

Das Vorsehen bzw. die Verwendung identischer Verbindungselemente für unterschiedliche, fluidbetriebene Handstücke ist ein ökonomischer Vorteil, da zum Beispiel höhere Stückzahlen des Verbindungselements hergestellt werden können.

Die unterschiedlichen, mit Fluid betriebenen Handstücke unterscheiden sich zum Beispiel in einem oder mehreren der folgenden Merkmale:
- dem Vorhandensein oder Fehlen eine Beleuchtungsvorrichtung zur Beleuchtung einer Behandlungsstelle;
- dem Vorhandensein oder Fehlen einer elektrischen Versorgungsleitung für eine in dem Handstück angeordnete Beleuchtungsvorrichtung;
- dem Vorhandensein oder Fehlen eines optischen Lichtleiters zur Beleuchtung einer Behandlungsstelle;
- dem Vorhandensein oder Fehlen eines optischen Halbleiterelements, insbesondere einer Leuchtdiode zur Beleuchtung einer Behandlungsstelle;
- dem Vorhandensein oder Fehlen eines Sensors am Handstück;
- dem Vorhandensein oder Fehlen einer elektrischen Leitung zur Übertragung von Messwerten eines Sensors;
- dem Vorhandensein oder Fehlen einer elektrischen Leitung zur Übertragung von Steuer- oder Regelsignalen;
- dem Vorhandensein oder Fehlen einer elektronischen Schaltung und/ oder eines digitalen Speichers und/ oder eines Mikrocontrollers in dem Handstück;
- dem Vorhandensein oder Fehlen von drahtlosen Kommunikationsmitteln zur Übertragung von Daten, zum Beispiel Identifikationsdaten; die Kommunikationsmittel können zum Beispiel eine Antenne, ein RFID-Etikett, eine Bluetooth-Vorrichtung aufweisen;
- in den Abmessungen, insbesondere den Außenabmessungen des Kopfabschnitts und/ oder der Außenhülse;
- in der Gestaltung des Kupplungsendes, insbesondere in der Anzahl, der Art und/ oder der Anordnung der Medien- und/ oder elektrischen Anschlüsse am Kupplungsende;
- in der Menge des zum Antrieb benötigten Antriebsfluids;
- in der Arbeitsleistung des Handstücks.

Gemäß einem Ausführungsbeispiel ist ein Verfahren zur Herstellung eines im Vorstehenden beschriebenen, einteiligen, fluidleitenden Verbindungselements vorgesehen, bei dem das (gesamte) fluidleitende Verbindungselement mit der ersten Stirnfläche, der zweiten Stirnfläche, dem Körper und den mehreren Fluidleitungen als einteiliges Kunststoffbauteil durch ein Spritzgussverfahren und/ oder aus einem für das Spritzgießen geeigneten Kunststoff hergestellt wird. Wie schon mehrmals erwähnt kann das Herstellungsverfahren auch umfassen, dass ein weiteres Element, zum Beispiel das zumindest eine Rohrstück und/ oder das Positionierelement, mit dem fluidleitenden Verbindungselement einteilig und durch ein Spritzgussverfahren und/ oder aus einem für das Spritzgießen geeigneten Kunststoff hergestellt wird. Im Übrigen sind die im Vorstehenden beschriebenen Merkmale des einteiligen, fluidleitenden Verbindungselements in entsprechender Weise auf das Herstellungsverfahren des einteiligen, fluidleitenden Verbindungselements anwendbar, so dass, zur Vermeidung von Wiederholungen, auf diese Merkmale verwiesen wird.

Die Erfindung wird nachfolgend anhand bevorzugter Ausführungsbeispiele und Bezug nehmend auf die beigefügten Zeichnungen erläutert. Es zeigt die
Figur 1 ein einteiliges, aus Kunststoff hergestelltes, fluidleitendes Verbindungselement mit Aufsicht auf die Stirnfläche, die, wenn das Verbindungselement in einem Handstück aufgenommen ist, dem Kupplungsende des Handstücks zugewandt ist;
Figur 2 das einteilige, aus Kunststoff hergestellte, fluidleitende Verbindungselement der Figur 1 mit Aufsicht auf die Stirnfläche, die, wenn das Verbindungselement in einem Handstück aufgenommen ist, dem Kopfabschnitt des Handstücks zugewandt ist;
Figur 3 einen Längsschnitt durch ein einteiliges, aus Kunststoff hergestelltes, fluidleitendes Verbindungselement und durch eine der mehreren Fluidleitungen des Verbindungselements, vorzugsweise einer Druckgas leitenden Fluidleitung;
Figur 4 einen Längsschnitt durch ein einteiliges, aus Kunststoff hergestelltes, fluidleitendes Verbindungselement und durch zwei der mehreren Fluidleitungen des Verbindungselements;
Figur 5 einen Längsschnitt durch ein alternatives, einteiliges, aus Kunststoff hergestelltes, fluidleitendes Verbindungselement und durch eine der mehreren Fluidleitungen des Verbindungselements, vorzugsweise einer Druckgas leitenden Fluidleitung;
Figur 6 einen vertikalen Längsschnitt durch ein medizinisches, insbesondere dentales, mit Fluid betreibbares Handstück mit einem einteiligen, aus Kunststoff hergestellten, fluidleitenden Verbindungselement;
Figur 7 einen horizontalen Längsschnitt durch das Handstück der Figur 6.

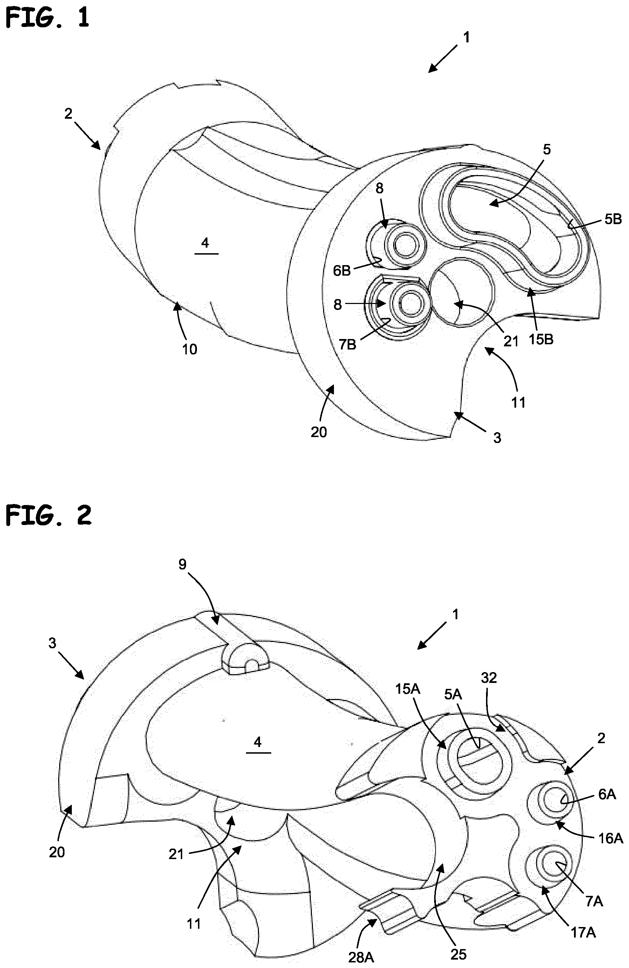

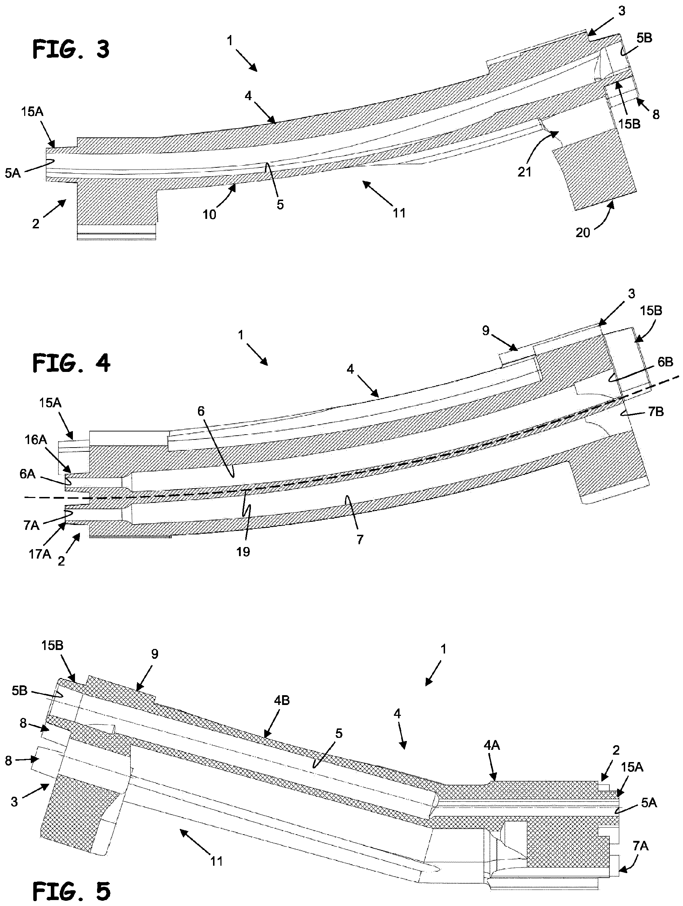

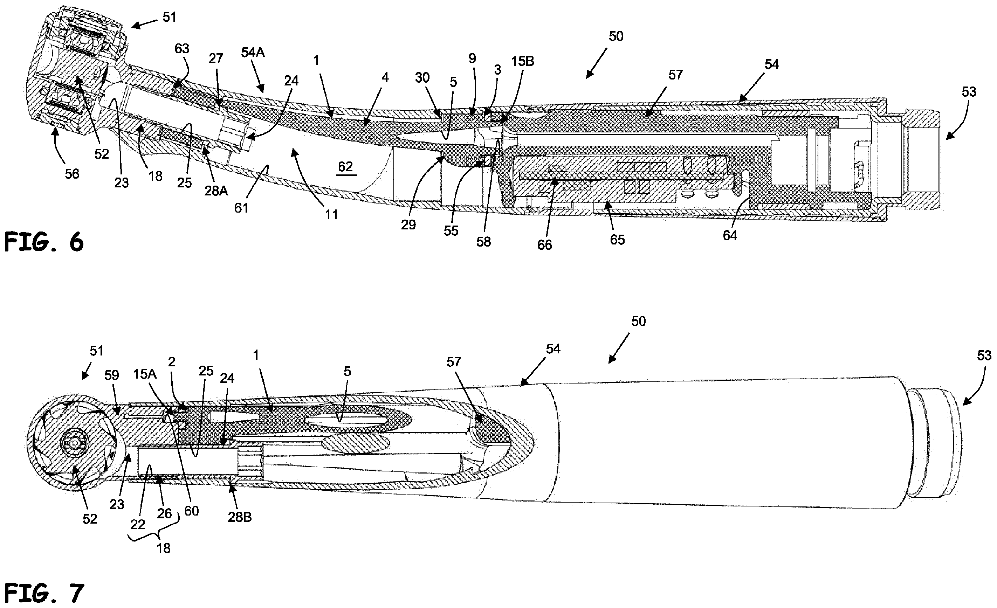

Die Figuren 1 - 5 zeigen fluidleitende Verbindungselemente 1 eines mit Fluid angetriebenen, medizinischen, insbesondere dentalen, Handstücks 50 (siehe Figuren 6, 7). Das fluidleitende Verbindungselement 1 umfasst eine erste, einem Kopfabschnitt 51 des Handstücks 50 zugewandte Stirnfläche 2, eine zweite, dem Kupplungsende 53 des Handstücks 50 zugewandte Stirnfläche 3 und einen sich von der ersten Stirnfläche 2 zur zweiten Stirnfläche 3 erstreckenden Körper 4. Das fluidleitende Verbindungselemente 1, insbesondere der Körper 4, erstreckt sich entlang einer Längsachse 19, siehe Figur 4. Mehrere Fluidleitungen 5, 6, 7 verlaufen von der ersten Stirnfläche 2 durch den Körper 4 zur zweiten Stirnfläche 3. Wie insbesondere aus den Schnittdarstellungen der Figuren 3 - 5 zu erkennen ist, ist das fluidleitende Verbindungselement 1 einschließlich der ersten Stirnfläche 2, der zweiten Stirnfläche 3, dem Körper 4 und den mehreren Fluidleitungen 5, 6, 7 einteilig ausgebildet. Das fluidleitende Verbindungselement 1 ist des Weiteren durch Spritzguss und aus einem für das Spritzgießen geeigneten Kunststoff hergestellt.

Die Fluidleitungen 5, 6, 7 sind zum Leiten von Medien vorgesehen, zum Beispiel von Fluiden wie Gas und Flüssigkeiten, die insbesondere unter Druck stehen, besonders bevorzugt von Druckluft und Wasser. Zumindest einige der Fluidleitungen 5, 6, 7 weisen einen sich im Körper 4 des fluidleitenden Verbindungselements 1 verändernden Innendurchmesser auf.

Gemäß den Ausführungsbeispielen der Figuren 1 - 5 ist die Fluidleitung 5 zum Leiten von Druckluft von der zweiten Stirnfläche 3 zur ersten Stirnfläche 2 vorgesehen. Das gemäß den Figuren 6 und 7 im Handstück 50 verbaute Verbindungselement 1 empfängt somit die vom Kupplungsende 53 des Handstücks 50 bereitgestellte Druckluft und leitet sie in Richtung des Kopfabschnitts 51 des Handstücks 50 weiter. Die durch die Fluidleitung oder Druckgasleitung 5 übertragene Druckluft ist insbesondere zum Antrieb eines durch Druckgas antreibbaren, drehbar gelagerten Laufrads 52 des Handstücks 50 vorgesehen. Mit dem Laufrad 52 ist eine Werkzeughalterung 56 drehfest verbunden, in die ein Behandlungswerkzeug aufnehmbar ist, wodurch das Behandlungswerkzeug in Rotation versetzbar ist.

Gemäß den Ausführungsbeispielen der Figuren 1 - 5 ist die Fluidleitung 6 zum Leiten von Druckluft von der zweiten Stirnfläche 3 zur ersten Stirnfläche 2 vorgesehen. Das gemäß den Figuren 6 und 7 im Handstück 50 verbaute Verbindungselement 1 empfängt somit die vom Kupplungsende 53 des Handstücks 50 bereitgestellte Druckluft und leitet sie über die Fluidleitung 6 in Richtung des Kopfabschnitts 51 des Handstücks 50 weiter. Die durch die Fluidleitung oder Druckgasleitung 6 übertragene Druckluft ist insbesondere zur Abgabe in Richtung des am Handstück 50 befestigten Behandlungswerkzeugs und/ oder der Behandlungsstelle vorgesehen. Dazu ist am Kopfabschnitt 51 eine Düse vorgesehen, die mit der Fluidleitung 6 fluidübertragend verbunden ist.

Gemäß den Ausführungsbeispielen der Figuren 1 - 5 ist die Fluidleitung 7 zum Leiten von Wasser von der zweiten Stirnfläche 3 zur ersten Stirnfläche 2 vorgesehen. Das gemäß den Figuren 6 und 7 im Handstück 50 verbaute Verbindungselement 1 empfängt somit das vom Kupplungsende 53 des Handstücks 50 bereitgestellte Wasser und leitet es über die Fluidleitung 7 in Richtung des Kopfabschnitts 51 des Handstücks 50 weiter. Das durch die Fluidleitung oder Wasserleitung 7 übertragene Wasser ist insbesondere zur Abgabe in Richtung des am Handstück 50 befestigten Behandlungswerkzeugs und/ oder der Behandlungsstelle vorgesehen. Dazu ist am Kopfabschnitt 51 eine Düse vorgesehen, die mit der Fluidleitung 7 flüssigkeitsübertragend verbunden ist.

Selbstverständlich sind die in den vorstehenden Absätzen genannten Verwendungen der Fluidleitungen 5, 6, 7 zur Übertragung eines bestimmten Fluids nur beispielhaft, so dass, in Abhängigkeit davon, welche Fluidleitungen 5, 6, 7 mit welcher Medienquelle verbunden ist, die Fluidleitungen 5, 6, 7 auch geeignet sind, andere als die genannten Medien zu übertragen.

Die Fluidleitungen 5, 6, 7 enden in jeweiligen Öffnungen 5A, 6A, 7A an der ersten Stirnfläche 2 und Öffnungen 5B, 6B, 7B an der zweiten Stirnfläche 3. Gemäß den Ausführungsbeispielen der Figuren 1 - 5 sind die Öffnungen 5A, 5B; 6A; 7A durch ein Rohrstück 15A, 15B; 16A; 17A gebildet, das über die erste Stirnfläche 2 oder die zweite Stirnfläche 3 ragt und das einteilig mit dem fluidleitenden Verbindungselement 1 und aus Kunststoff, insbesondere durch Spritzguss, hergestellt ist. In den Öffnungen 6B; 7B, die im Wesentlichen plan oder plan mit der zweiten Stirnfläche 3 enden, siehe insbesondere Figur 4, ist ein separates, zum Beispiel metallisches oder aus Kunststoff gefertigtes, Rohrstück 8 zur Fluidleitung eingesteckt. Die einteiligen Rohrstücke 15A, 15B; 16A; 17A und die separaten, eingesteckten Rohrstücke 8 sind jeweils in Öffnungen von an das einteilige, fluidleitende Verbindungselement 1 anschließenden Komponenten des Handstücks 50 eingeführt. Dies ist beispielhaft in der Figur 6 zu erkennen: Rohrstück 15B der Fluidleitung 5 an der zweiten Stirnfläche 3 ragt in eine Aufnahme 58 eines Kupplungszylinders 57, der zwischen dem Kupplungsende 53 des Handstücks 50 und dem Verbindungselement 1 angeordnet ist. Der Kupplungszylinder 57 ist dafür vorgesehen, ein oder mehrere Fluide vom Kupplungsende 53 über die Rohrstücke 15A, 15B; 16A; 17A; 8 an das Verbindungselement 1 zu übertragen. Entsprechende Medienübergaben sind zwischen den Rohrstücken 8 an der zweiten Stirnfläche 3 und weiteren Aufnahmen (nicht abgebildet) am Kupplungszylinder 57 vorgesehen. Die Figur 7 zeigt die Medienübergabe an der ersten Stirnfläche 2, vom Verbindungselement 1 über das Rohrstück 15A an einen Fortsatz 59 des Kopfabschnitts 51. Der in einer Außenhülse 54 des Handstücks 50 aufgenommene Fortsatz 59 weist einen Einlass 60 auf, in dem das Rohrstück 15A aufgenommen ist. Entsprechende Medienübergaben sind auch zwischen den Rohrstücken 16A; 17A an der ersten Stirnfläche 2 und weiteren Einlässen (nicht abgebildet) am Fortsatz 59 vorgesehen.

Die Figuren 1 - 4 zeigen jeweils einteilige, fluidleitende Verbindungselemente 1, die entlang ihrer Längsausdehnung oder Längsachse 19 gebogen sind. Die Verbindungselemente 1 sind entlang ihrer Längsausdehnung gebogen spritzgegossen. In entsprechender Weise sind die Fluidleitungen 5, 6, 7 entlang ihrer Längsausdehnung durch den Körper 4 des fluidleitenden Verbindungselements 1 gebogen ausgebildet und gebogen spritzgegossen. Die Biegung oder der Biegeradius des fluidleitenden Verbindungselements 1, vorzugsweise auch der Fluidleitungen 5, 6, 7, und der Außenhülse 54 des Handstücks 50 sind derart aufeinander abgestimmt, dass das Verbindungselement 1 passend in den gebogenen Abschnitt 54A der Außenhülse 54 aufnehmbar ist.

Das in der Figur 5 dargestellte einteilige, fluidleitende Verbindungselement 1 ist entlang seiner Längsausdehnung oder Längsachse gewinkelt ausgebildet. Der Körper 4 umfasst hierbei einen ersten Abschnitt 4A und einen zweiten Abschnitt 4B, die gewinkelt zueinander angeordnet sind, wobei der Winkel ungleich 0° ist. Das fluidleitende Verbindungselement 1 der Figur 5 ist insbesondere entlang seiner Längsausdehnung gewinkelt spritzgegossen. In entsprechender Weise sind die Fluidleitungen 5, 6, 7 entlang ihrer Längsausdehnung durch den Körper 4 des fluidleitenden Verbindungselements 1 gewinkelt ausgebildet und gewinkelt spritzgegossen. Der Winkel des fluidleitenden Verbindungselements 1, vorzugsweise auch der Fluidleitungen 5, 6, 7, und der Außenhülse 54 des Handstücks 50 sind derart aufeinander abgestimmt, dass das Verbindungselement 1 passend in den gebogenen Abschnitt 54A der Außenhülse 54 aufnehmbar ist.

An dem fluidleitenden Verbindungselement 1 ist ein Positionierelement 9 zum Positionieren des fluidleitenden Verbindungselements 1 in dem medizinischen, insbesondere dentalen, Handstück 50 vorgesehen, siehe zum Beispiel Figuren 2, 4 und 5. Das Positionierelement 9 ist aus Kunststoff und einteilig mit dem fluidleitenden Verbindungselement 1 hergestellt, insbesondere durch Spritzguss. Das Positionierelement 9 ist an der Außenfläche 10 des Körpers 4 des fluidleitenden Verbindungselements 1 vorgesehen, insbesondere an oder als Teil einer Verbreiterung 20 an einem Ende des Körpers 4. Das Positionierelement 9 ist als vom Körper 4 abstehender Vorsprung ausgebildet, der insbesondere dazu vorgesehen ist, dass er die Innenwand 61 der Außenhülse 54 des Handstücks 50 kontaktiert, insbesondere eine zum Positionierelement 9 komplementäre Ausformung, siehe Figur 6.

Das fluidleitende Verbindungselement 1 weist des Weiteren an seiner Außenfläche 10 eine Ausnehmung 11 zur Aufnahme einer Medienleitung und/ oder eines Mediums und/ oder eines Sensors auf. Die Ausnehmung 11 nimmt zum Beispiel eine Medienleitung für ein Fluid und/ oder eine elektrische Leitung, insbesondere eine Versorgungs-, Steuer- und/ oder Signalleitung, und/ oder einen optischen Lichtleiter auf. Alternativ oder zusätzlich nimmt die Ausnehmung 11 ein Medium, zum Beispiel ein Fluid auf, das nicht in einer eigenen Leitung gefasst ist, und leitet dieses weiter, so dass die Ausnehmung 11 somit vorzugsweise auch als Fluidleitung ausgebildet ist. Die Ausnehmung 11 umfasst eine Einkerbung oder einen Kanal, der sich entlang des Körpers 4, im Wesentlichen entlang der Längsausdehnung des Körpers 4, vorzugsweise zwischen der ersten Stirnfläche 2 und der zweiten Stirnfläche 3, erstreckt. Die Ausnehmung 11 ist einteilig mit dem Verbindungselement 1 hergestellt, insbesondere durch Spritzguss. Die Ausnehmung 11 ist zur Umgebung offen. Wenn das Verbindungselement 1 in dem Handstück 50 aufgenommen ist, dann bilden die Ausnehmung 11 und ein Abschnitt der Innenwand 61 der Außenhülse 54 eine Leitung oder einen Leitungskanal 62, siehe Figur 6. Dieser Leitungskanal 62 ist dazu vorgesehen Druckluft, insbesondere sogenannte Rückluft, die vom Kopfabschnitt 51 in Richtung des Kupplungsendes 53 fließt, zu leiten. Diese Druckluft ist dabei nicht in einer eigenen Leitung gefasst, sondern kontaktiert unmittelbar die Außenfläche 10, an der die Ausnehmung 11 gebildet ist, und die Innenwand 61 der Außenhülse 54. Der aus der Ausnehmung 11 und der Innenwand 61 gebildete Leitungskanal 62 bildet somit die Druckluftleitung, welche die Druckluft fasst und kontaktiert. Zusätzlich kann/ können in dem Leitungskanal 62 eine Medienleitung, ein optischer Lichtleiter (siehe nächster Absatz) und/ oder ein Sensor angeordnet sein.

Das fluidleitende Verbindungselement 1 umfasst eine Öffnung oder Durchführung 21 für einen optischen Lichtleiter, siehe Figuren 1 - 3. Die Durchführung 21 ist getrennt von der im Vorstehenden beschriebenen Ausnehmung 11 ausgebildet. Die Durchführung 21 ist in der zweiten Stirnfläche 3 in sich geschlossen ausgebildet und lagert somit den optischen Lichtleiter zuverlässig. Die Durchführung 21 ist einteilig mit dem Verbindungselement 1 und insbesondere durch Spritzgießens hergestellt. Die Öffnung oder Durchführung 21 ist mit der Ausnehmung 11 verbunden, so dass der optische Lichtleiter sich in die Ausnehmung 11 erstrecken kann, um zum Beispiel optische Strahlung in Richtung des Kopfabschnitts 51 zu übertragen.

Das fluidleitende Verbindungselement 1 ist über eine Schraubverbindung 18 mit dem Kopfabschnitt 51 des medizinischen, insbesondere dentalen, Handstücks 50 verbunden, siehe Figuren 6 und 7. Die Schraubverbindung 18 umfasst ein erstes Gewinde 22 am Kopfabschnitt 51, insbesondere an dessen Fortsatz 59, der in der Außenhülse 54 des Handstücks 50 aufgenommen ist. Das Gewinde 22 ist als Innengewinde einer Bohrung 23 des Fortsatzes 59 ausgebildet. Die Schraubverbindung 18 umfasst des Weiteren eine Gewindeschraube 24, die in dem fluidleitenden Verbindungselement 1 und in der Bohrung 23 des Kopfabschnitts 51 aufnehmbar ist und die mit dem Gewinde 22 des Kopfabschnitts 51 verschraubbar ist, um den Kopfabschnitt 51 mit dem fluidleitenden Verbindungselement 1 zu verbinden. Dazu ist die Gewindeschraube 24 in einer Bohrung oder Öffnung 25 des Verbindungselements 1 aufgenommen. Die Öffnung 25 ist vorzugsweise, so wie in Figur 2 dargestellt, Teil der Ausnehmung 11 oder mit der Ausnehmung 11 verbunden, so dass die Öffnung 25 bevorzugt zur Aufnahme der Gewindeschraube 24 und zur Übertragung eines Mediums, wie dies im Vorstehenden für die Ausnehmung 11 beschrieben ist, vorgesehen ist.

Die Gewindeschraube 24 ist als Hohlschraube ausgebildet, an deren Außenseite ein Außengewinde 26 vorgesehen ist, das mit dem Innengewinde 22 des Fortsatzes 59 verschraubt ist. An der Außenseite der Hohlschraube 24 ist ein erster Anschlag 27 vorgesehen, an der Außenfläche 10 des fluidleitenden Verbindungselements 1 ein Gegenanschlag 28A (siehe auch Figur 2) und/ oder an der Innenseite oder Innenwand 61 der Außenhülse 54 ein erster Gegenanschlag 28B vorgesehen. Der erste Anschlag 27 und der erste Gegenanschlag 28A und/ oder 28B kontaktieren einander, wenn die Hohlschraube 24, das Verbindungselement 1 und der Fortsatz 59 des Kopfabschnitts 51 in der Außenhülse 54 aufgenommen sind und das fluidleitende Verbindungselement 1 und der Kopfabschnitt 51 über die Hohlschraube 24 verbunden sind. Dadurch ist das Verbindungselement 1 zwischen der Hohlschraube 24, insbesondere dem ersten Anschlag 27, und dem Kopfabschnitt 51, insbesondere einer dem Verbindungselement 1 zugewandten Stirnseite 63 des Fortsatzes 59, geklemmt und damit fixiert.

Vorzugsweise ist an dem Außenmantel oder der Außenfläche 10 des fluidleitenden Verbindungselements 1 ein zweiter Anschlag 29 und an der Innenwand 61 der Außenhülse 54 des Handstücks 50 ein zweiter Gegenanschlag 30 vorgesehen. Vorzugsweise kontaktieren der zweite Anschlag 29 und der zweite Gegenanschlag 30 einander, wenn die Hohlschraube 24, das Verbindungselement 1 und der Fortsatz 59 des Kopfabschnitts 51 in der Außenhülse 54 aufgenommen sind und das Verbindungselement 1 und der Kopfabschnitt 51 über die Hohlschraube 24 verbunden sind. Alternativ ist es auch möglich, dass der zweite Anschlag 29 und Gegenanschlag 30 nicht vorhanden sind und insbesondere das Verbindungselement 1 die Innenwand 61 der Außenhülse 54 nicht kontaktiert.

Die als Hohlschraube ausgebildete Gewindeschraube 24 ist zur Leitung eines Mediums, insbesondere von Druckluft, vorzugsweise von sogenannter Rückluft ausgebildet. Als Rückluft wird Druckluft bezeichnet, die vom Laufrad 52 in Richtung des Kupplungsendes 53 des Handstücks 50 fließt. Die Bohrung 23 des Fortsatzes 59 und die Hohlschraube 24 bilden hierzu eine Ableitung, durch welche die Rückluft vom Laufrad 52 in die Ausnehmung 11 bzw. in den Leitungskanal 62 gelangt. Der bereits im Vorstehenden beschriebene Leitungskanal 62 leitet die Rückluft dann weiter in Richtung des Kupplungsendes 53.

An der ersten Stirnfläche 2 und/ oder an der zweiten Stirnfläche 3 ist jeweils ein Dichtelement vorgesehen. Beispielhaft ist in der Figur 6 an der zweiten Stirnfläche 3 ein derartiges Dichtelement 55 erkennbar. Das Dichtelement 55 ist ein separates Bauteil, das auf die erste und/ oder zweite Stirnfläche 2, 3 aufgelegt ist. An der ersten Stirnfläche 2 ist eine Vertiefung 32 vorgesehen, in der das Dichtelement 55 einlegbar und positionierbar ist. Eine entsprechende Vertiefung kann auch am der zweiten Stirnfläche 3 vorgesehen sein.

Das im Handstück 50 aufgenommene, einteilige, fluidleitende Verbindungselement 1 ist entlang seiner Längsausdehnung oder Längsachse 19 gebogen und weist entlang seiner Längsausdehnung oder Längsachse 19 einen Biegeradius auf, siehe Figuren 6 und 7. Das Verbindungselement 1 kann somit einem in den Figuren 1 - 4 abgebildeten Verbindungselement 1 entsprechen, das entlang seiner Längsausdehnung gebogen ist, insbesondere gebogen spritzgegossen ist, und bei der Montage gebogen in das Handstück 50 eingeführt wird, so wie dies im Vorstehenden beschrieben ist. In entsprechender Art kann auch ein einteiliges, fluidleitendes Verbindungselement 1, das entlang seiner Längsausdehnung gewinkelt ist, insbesondere gewinkelt spritzgegossen ist, und/ oder zwei gewinkelt zueinander ausgebildete Körperabschnitte 4A, 4B aufweist, zum Beispiel das in der Figur 5 dargestellte Verbindungselement 1, in das Handstück 50 eingefügt sein bzw. werden.

Alternativ ist das im Handstück 50 aufgenommene, einteilige, fluidleitende Verbindungselement 1 der Figuren 6 und 7 derart elastisch verformbar, dass es in einem gebogenen Hülsenabschnitt 54A des medizinischen, insbesondere dentalen, Handstücks 50 aufnehmbar ist und sich insbesondere der Biegung des gebogenen Hülsenabschnitts 54A anpasst, so wie dies ebenfalls im Vorstehenden beschrieben ist. Ein derartig elastisch verformbares Verbindungselement 1 kann zum Beispiel nach seiner Herstellung und/ oder vor der Montage in dem Handstück 50 gerade, das heißt ohne Biegeradius oder Winkel, ausgebildet sein.

Der Kupplungszylinder 57 ist vorzugsweise aus Kunststoff hergestellt, insbesondere ebenfalls durch Spritzguss und/ oder durch einen für das Spritzgießen geeigneten Kunststoff, beispielsweise durch einen der im Vorstehenden genannten Kunststoffe. Die Herstellung des fluidleitenden Verbindungselements 1 und des Kupplungszylinders 57 aus Kunststoff bewirken in vorteilhafter Weise eine merkliche Verringerung des Gewichts des Handstücks 50. Der Kupplungszylinder 57 ist dafür vorgesehen, ein oder mehrere Fluide vom Kupplungsende 53 an das Verbindungselement 1 zu übertragen. In oder an dem Kupplungszylinder 57, zum Beispiel an einem Rücksprung 64, können optional weitere Komponenten des Handstücks 50 aufgenommen und/ oder gelagert sein. Beispielhaft ist in der Figur 6 eine elektronische Komponente 65 dargestellt. Die elektronische Komponente umfasst zum Beispiel eines der folgenden Bauteile: eine Platine 66; einen Sensor; ein Akzelerometer; ein Gyroskop; einen Temperatursensor; einen Controller; ein Datenspeicher; einen Funksender; einen Funkempfänger; ein RFID-Etikett; eine Strahlungsquelle; eine Diode, insbesondere eine Leuchtdiode; einen elektrischen Schaltkreis zur Aufbereitung elektrischer Energie, insbesondere für einen im Handstück 50 angeordneten optischen Halbleiter; ein Gleichrichter; ein Wechselrichter; ein elektrischer Widerstand; eine elektrische Spule; und ähnliche Bauteile. Von der elektronischen Komponente 65 oder einem Bauteil davon kann sich eine Leitung, zum Beispiel eine elektrische Leitung, Signalleitung oder ein Lichtleiter, in das fluidleitende Verbindungselement 1 erstrecken, insbesondere in die Ausnehmung 11 oder den Leitungskanal 62.

Die beschriebenen oder dargestellten Ausführungsbeispiele dienen insbesondere der Veranschaulichung der Erfindung. Die in einem Ausführungsbeispiel offenbarten Merkmale sind daher nicht auf dieses Ausführungsbeispiel beschränkt, sondern sind einzeln oder gemeinsam mit einem oder mehreren Merkmalen eines der anderen Ausführungsbeispiele kombinierbar.

## Patentansprüche

1. Fluidleitendes Verbindungselement (1) eines mit Fluid angetriebenen, medizinischen, insbesondere dentalen, Handstücks (50), wobei das Handstück (50) einen Kopfabschnitt (51) mit einem Laufrad (52), das durch ein Antriebsfluid in Drehung versetzbar und mit einem Werkzeug verbindbar ist, und ein Kupplungsende (53) zum Anschluss an eine Fluidquelle aufweist, und wobei das fluidleitende Verbindungselement (1) umfasst:
eine erste, dem Kopfabschnitt (51) zugewandte Stirnfläche (2),
eine zweite, dem Kupplungsende (53) zugewandte Stirnfläche (3),
einen sich von der ersten Stirnfläche (2) zur zweiten Stirnfläche (3) erstreckenden Körper (4), und
mehrere sich von der ersten Stirnfläche (2) durch den Körper (4) zur zweiten Stirnfläche (3) erstreckende Fluidleitungen (5, 6, 7), **dadurch gekennzeichnet, dass** das fluidleitende Verbindungselement (1) mit der ersten Stirnfläche (2), der zweiten Stirnfläche (3), dem Körper (4) und den mehreren Fluidleitungen (5, 6, 7) einteilig aus Kunststoff gebildet ist.

2. Fluidleitendes Verbindungselement (1) gemäß Anspruch 1, **dadurch gekennzeichnet, dass**
das fluidleitende Verbindungselement (1) durch Spritzguss und/ oder aus einem für das Spritzgießen geeigneten Kunststoff hergestellt ist.

3. Fluidleitendes Verbindungselement (1) gemäß Anspruch 1 oder 2, **dadurch gekennzeichnet, dass**
das fluidleitende Verbindungselement (1) entlang seiner Längsausdehnung gebogen ist.

4. Fluidleitendes Verbindungselement (1) gemäß einem der vorstehenden Ansprüche,
**dadurch gekennzeichnet, dass**
zumindest eine der mehreren Fluidleitungen (5, 6, 7) entlang ihrer Längsausdehnung durch den Körper (4) des fluidleitenden Verbindungselements (1) gebogen ausgebildet ist.

5. Fluidleitendes Verbindungselement (1) gemäß einem der vorstehenden Ansprüche,
**dadurch gekennzeichnet, dass**
das fluidleitende Verbindungselement (1) derart elastisch verformbar ist, dass es in einem gebogenen Hülsenabschnitt (54A) des medizinischen, insbesondere dentalen, Handstücks (50) aufnehmbar ist.

6. Fluidleitendes Verbindungselement (1) gemäß einem der vorstehenden Ansprüche,
**dadurch gekennzeichnet, dass**
die Fluidleitungen (5, 6, 7) in Öffnungen (5A, 5B; 6A, 6B; 7A, 7B) enden, wobei zumindest eine dieser Öffnungen (5A, 5B; 6A, 6B; 7A, 7B) durch ein Rohrstück (15A, 15B; 16A, 16B; 17A, 17B) gebildet ist, dass über die erste oder zweite Stirnfläche (2, 3) ragt und das aus Kunststoff und einteilig mit dem fluidleitenden Verbindungselement (1) ausgebildet ist.

7. Fluidleitendes Verbindungselement (1) gemäß einem der vorstehenden Ansprüche 1 - 4, **dadurch gekennzeichnet, dass**
die Fluidleitungen (5, 6, 7) in Öffnungen (5A, 5B; 6A, 6B; 7A, 7B) enden, wobei in zumindest eine dieser Öffnungen (5A, 5B; 6A, 6B; 7A, 7B) ein Rohrstück (8) zur Fluidleitung eingesteckt ist.

8. Fluidleitendes Verbindungselement (1) gemäß einem der vorstehenden Ansprüche,
**dadurch gekennzeichnet, dass**
das fluidleitende Verbindungselement (1) ein Positionierelement (9) zum Positionieren des fluidleitenden Verbindungselements (1) in dem medizinischen, insbesondere dentalen, Handstück (50) aufweist, wobei das Positionierelement (9) aus Kunststoff und einteilig mit dem fluidleitenden Verbindungselement (1) ausgebildet ist.

9. Fluidleitendes Verbindungselement (1) gemäß einem der vorstehenden Ansprüche,
**dadurch gekennzeichnet, dass**
zumindest eine der mehreren Fluidleitungen (5, 6, 7) einen sich im Körper (4) des fluidleitenden Verbindungselements (1) verändernden Innendurchmesser aufweist.

10. Fluidleitendes Verbindungselement (1) gemäß einem der vorstehenden Ansprüche,
**dadurch gekennzeichnet, dass**
das fluidleitende Verbindungselement (1) an seiner Außenfläche (10) eine Ausnehmung (11) zur Aufnahme einer Medienleitung und/ oder eines Mediums aufweist.

11. Fluidleitendes Verbindungselement (1) gemäß einem der vorstehenden Ansprüche,
**dadurch gekennzeichnet, dass**
das fluidleitende Verbindungselement (1) über eine Schraubverbindung (18) mit dem Kopfabschnitt (51) des medizinischen, insbesondere dentalen, Handstücks (50) verbunden ist.

12. Medizinisches, insbesondere dentales, mit Fluid betriebenes Handstück (50), **gekennzeichnet durch**
ein fluidleitendes Verbindungselement (1) gemäß einem der vorstehenden Ansprüche.

13. Set von unterschiedlichen, medizinischen, insbesondere dentalen, mit Fluid betriebenen Handstücken (50), **dadurch gekennzeichnet, dass** die unterschiedlichen Handstücke (50) identische einteilige, aus Kunstsoff hergestellte, fluidleitende Verbindungselemente (1) gemäß einem der vorstehenden Ansprüche 1 - 11 aufweisen.

14. Verwendung identischer einteiliger, fluidleitender Verbindungselemente (1) gemäß einem der vorstehenden Ansprüche 1 - 11 zur Herstellung unterschiedlicher, medizinischer, insbesondere dentaler, mit Fluid betriebener Handstücke (50).

15. Verfahren zur Herstellung eines fluidleitenden Verbindungselements (1) gemäß einem der vorstehenden Ansprüche 1 - 11, **dadurch gekennzeichnet, dass** das fluidleitende Verbindungselement (1) mit der ersten Stirnfläche (2), der zweiten Stirnfläche (3), dem Körper (4) und den mehreren Fluidleitungen (5, 6, 7) als einteiliges Kunststoffbauteil durch ein Spritzgussverfahren hergestellt wird.

## Claims

1. A fluid-conducting connector element (1) of a fluid-driven medical, in particular dental, handpiece (50), wherein the handpiece (50) comprises a head section (51) with an impeller (52) that can be set into rotation by a drive fluid and can be connected to a tool, and a coupling end (53) for connection to a fluid source, wherein the fluid-conducting connector element (1) comprises:
a first end face (2) facing the head section (51),
a second end face (3) facing the coupling end (53),
a body (4) extending from the first end face (2) to the second end face (3), and
a plurality of fluid lines (5, 6, 7) extending from the first end face (2) through the body (4) to the second end face (3), **characterized in that**
the fluid-conducting connector element (1), including the first end face (2), the second end face (3), the body (4), and the plurality of fluid lines (5, 6, 7), is formed as a one-piece component made of plastic.

2. The fluid-conducting connector element (1) according to claim 1, **characterized in that**
the fluid-conducting connector element (1) is manufactured by injection molding and/or from a plastic suitable for injection molding.

3. The fluid-conducting connector element (1) according to claim 1 or 2,
**characterized in that**
the fluid-conducting connector element (1) is curved along its longitudinal extension.

4. The fluid-conducting connector element (1) according to any of the preceding claims, **characterized in that**
at least one of the plurality of fluid lines (5, 6, 7) is formed in a curved manner along its longitudinal extension through the body (4) of the fluid-conducting connecting element (1).

5. The fluid-conducting connector element (1) according to any of the preceding claims, **characterized in that**
the fluid-conducting connector element (1) is elastically deformable such that it can be received in a curved sleeve section (54A) of the medical, in particular dental, handpiece (50).

6. The fluid-conducting connector element (1) according to any of the preceding claims, **characterized in that**
the fluid lines (5, 6, 7) end in openings (5A, 5B; 6A, 6B; 7A, 7B), wherein at least one of these openings (5A, 5B; 6A, 6B; 7A, 7B) is formed by a tube piece (15A, 15B; 16A, 16B; 17A, 17B) which projects beyond the first or second end face (2, 3) and is formed from plastic and in one-piece with the fluid-conducting connector element (1).

7. The fluid-conducting connector element (1) according to any of claims 1 to 4,
**characterized in that**
the fluid lines (5, 6, 7) end in openings (5A, 5B; 6A, 6B; 7A, 7B), wherein a tube piece (8) for conducting fluid is inserted into at least one of these openings (5A, 5B; 6A, 6B; 7A, 7B).

8. The fluid-conducting connector element (1) according to any of the preceding claims, **characterized in that**
the fluid-conducting connector element (1) comprises a positioning element (9) for positioning the fluid-conducting connector element (1) in the medical, in particular dental, handpiece (50), wherein the positioning element (9) is formed from plastic and in one-piece with the fluid-conducting connector element (1).

9. The fluid-conducting connector element (1) according to any of the preceding claims, **characterized in that**
at least one of the plurality of fluid lines (5, 6, 7) has an inner diameter that varies within the body (4) of the fluid-conducting connector element (1).

10. The fluid-conducting connector element (1) according to any of the preceding claims, **characterized in that**
the fluid-conducting connector element (1) comprises a recess (11) on its outer surface (10) for receiving a media line and/or a medium.

11. The fluid-conducting connector element (1) according to any of the preceding claims, **characterized in that**
the fluid-conducting connector element (1) is coupled to the head section (51) of the medical, in particular dental, handpiece (50) by a screw connection (18).

12. A medical, in particular dental, fluid-driven handpiece (50), **characterized by** a fluid-conducting connector element (1) according to any of the preceding claims.

13. A set of different medical, in particular dental, fluid-driven handpieces (50),
**characterized in that**
the different handpieces (50) comprise identical one-piece fluid-conducting connector elements (1) made of plastic according to any of claims 1-11.

14. Use of identical one-piece fluid-conducting connector elements (1) according to any of claims 1-11 for manufacturing different medical, in particular dental, fluid-driven handpieces (50).

15. A method for manufacturing a fluid-conducting connector element (1) according to any of claims 1-11, **characterized in that**
the fluid-conducting connector element (1), including the first end face (2), the second end face (3), the body (4), and the plurality of fluid lines (5, 6, 7), is manufactured as a one-piece plastic component by an injection-molding process.

## Revendications

1. Élément de raccordement conducteur de fluide (1) d'une pièce à main (50) médicale, notamment dentaire, entraînée par fluide, la pièce à main (50) comportant une section de tête (51) dotée d'une roue (52), qui est susceptible d'être amenée en rotation par un fluide d'entraînement et qui peut se raccorder sur un outil, et une extrémité d'accouplement (53) pour la connexion sur une source de fluide, et l'élément de raccordement conducteur de fluide (1) comprenant:
une première face frontale (2), tournée vers la section de tête (51),
une deuxième face frontale (3), tournée vers l'extrémité d'accouplement (53),
un corps (4), s'étendant de la première face frontale (2) vers la deuxième face frontale (3) et
plusieurs conduites de fluide (5, 6, 7), s'étendant de la première face frontale (2) à travers le corps (4) vers la deuxième face frontale (3), **caractérisé en ce que**
l'élément de raccordement conducteur de fluide (1) avec la première face frontale (2), la deuxième face frontale (3), le corps (4) et les plusieurs conduites de fluide (5, 6, 7) est constitué en matière plastique, en monobloc.

2. Élément de raccordement conducteur de fluide (1) selon la revendication 1,
**caractérisé en ce que**
l'élément de raccordement conducteur de fluide (1) est fabriqué par moulage par injection et / ou en une matière plastique adaptée pour mouler par injection.

3. Élément de raccordement conducteur de fluide (1) selon la revendication 1 ou 2,
**caractérisé en ce que**
l'élément de raccordement conducteur de fluide (1) est recourbé le long de son extension longitudinale.

4. Élément de raccordement conducteur de fluide (1) selon l'une quelconque des revendications précédentes, **caractérisé en ce**
**qu'**au moins l'une des plusieurs conduites de fluide (5, 6, 7) est conçue en étant recourbée sur son extension longitudinale à travers le corps (4) de l'élément de raccordement conducteur de fluide (1).

5. Élément de raccordement conducteur de fluide (1) selon l'une quelconque des revendications précédentes, **caractérisé en ce que**
l'élément de raccordement conducteur de fluide (1) est élastiquement déformable, de sorte à pouvoir être reçu dans une section de manchon (54A) recourbée de la pièce à main (50) médicale, notamment dentaire.

6. Élément de raccordement conducteur de fluide (1) selon l'une quelconque des revendications précédentes, **caractérisé en ce que**
les conduites de fluide (5, 6, 7) se terminent dans des orifices (5A, 5B ; 6A, 6B ; 7A, 7B), au moins l'un desdits orifices (5A, 5B ; 6A, 6B ; 7A, 7B) étant constitué par une pièce tubulaire (15A, 15B ; 16A, 16B ; 17A, 17B), qui saillit au-delà de la première ou de la deuxième faces frontales (2, 3) et qui est constituée en matière plastique et en monobloc avec l'élément de raccordement conducteur de fluide (1).

7. Élément de raccordement conducteur de fluide (1) selon l'une quelconque des revendications précédentes 1 à 4, **caractérisé en ce que**
les conduites de fluide (5, 6, 7) terminent dans des orifices (5A, 5B ; 6A, 6B ; 7A, 7B), dans au moins l'un desdits orifices (5A, 5B ; 6A, 6B ; 7A, 7B) étant insérée une pièce tubulaire (8) pour conduire un fluide.

8. Élément de raccordement conducteur de fluide (1) selon l'une quelconque des revendications précédentes, **caractérisé en ce que**
l'élément de raccordement conducteur de fluide (1) comporte un élément de positionnement (9), pour positionner l'élément de raccordement conducteur de fluide (1) dans la pièce à main (50) médicale, notamment dentaire, l'élément de positionnement (9) étant constitué en matière plastique et en monobloc avec l'élément de raccordement conducteur de fluide (1).

9. Élément de raccordement conducteur de fluide (1) selon l'une quelconque des revendications précédentes, **caractérisé**
**en ce qu'**au moins l'une des plusieurs conduites de fluide (5, 6, 7) présente un diamètre intérieur variant dans le corps (4) de l'élément de raccordement conducteur de fluide (1).

10. Élément de raccordement conducteur de fluide (1) selon l'une quelconque des revendications précédentes, **caractérisé en ce que**
l'élément de raccordement conducteur de fluide (1) comporte sur sa surface extérieure (10) un évidement (11), destiné à recevoir une conduite d'un agent et / ou un agent.

11. Élément de raccordement conducteur de fluide (1) selon l'une quelconque des revendications précédentes, **caractérisé en ce que**
l'élément de raccordement conducteur de fluide (1) est raccordé par l'intermédiaire d'un raccordement vissé (18) avec la section de tête (51) de la pièce à main (50) médicale, notamment dentaire.

12. Pièce à main (50) médicale, notamment dentaire actionnée par fluide, **caractérisée par**
un élément de raccordement conducteur de fluide (1) selon l'une quelconque des revendications précédentes.

13. Kit, comprenant différentes pièces à main (50) médicales, notamment dentaires, actionnées par fluide, **caractérisé en ce que**
les différentes pièces à main (50) comportent des éléments de raccordement conducteurs de fluide (1) identiques, fabriqués en monobloc en matière plastique selon l'une quelconque des revendications précédentes 1 à 11.

14. Utilisation d'éléments de raccordement conducteurs de fluide (1) identiques, en monobloc selon l'une quelconque des revendications précédentes 1 à **11** pour fabriquer différentes pièces à main (50) médicales, notamment dentaires, actionnées par fluide.

15. Procédé, destiné à fabriquer un élément de raccordement conducteur de fluide (1) selon l'une quelconque des revendications précédentes 1 à **11, caractérisé en ce que** l'on fabrique par un procédé de moulage par injection l'élément de raccordement conducteur de fluide (1) en tant que composant monobloc en matière plastique avec la première face frontale (2), la deuxième face frontale (3), le corps (4) et les plusieurs conduites de fluide (5, 6, 7).
